Europäisches Patentamt

**European Patent Office**

Office européen des brevets

(11) Veröffentlichungsnummer: **0 007 992**
**B1**

(12) **EUROPÄISCHE PATENTSCHRIFT**

<table>
<tr><td>④⑤</td><td>Veröffentlichungstag der Patentschrift:<br>**28.07.82**</td><td>⑤①</td><td>Int. Cl.³: **E 04 H 14/00,** G 03 B 21/00,<br>H 04 N 7/18</td></tr>
<tr><td>②①</td><td>Anmeldenummer: **79102134.8**</td><td></td><td></td></tr>
<tr><td>②②</td><td>Anmeldetag: **27.06.79**</td><td></td><td></td></tr>
</table>

(54) **Autokino.**

(30) Priorität: **09.08.78 DE 2834929**

(43) Veröffentlichungstag der Anmeldung:
**20.02.80 Patentblatt 80/4**

(45) Bekanntmachung des Hinweises auf die Patenterteilung:
**28.07.82 Patentblatt 82/30**

(84) Benannte Vertragsstaaten:
**AT BE CH FR GB NL SE**

(56) Entgegenhaltungen:
**DE-B-1 234 784**
**GB-A-1 176 371**
**US-A-2 734 420**
**US-A-3 751 670**
**US-A-3 968 327**
**US-A-4 074 322**

(73) Patentinhaber: **Reich, Helmut, Holtum-Geest No. 7,
2816 Kirchlinteln (DE)**

(72) Erfinder: **Reich, Helmut, Holtum-Geest No. 7,
2816 Kirchlinteln (DE)**

(74) Vertreter: **Hauck, Hans, Dipl.-Ing. et al, Patentanwälte
Hauck - Schmitz - Graalfs Wehnert - Carstens - Dr.
Döring Kaiser-Wilhelm-Ring 41,
D-4000 Düsseldorf 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Autokino

Die Erfindung betrifft ein Autokino mit einer zentralen Informationsabspieleinrichtung und mit einer Vielzahl von jeweils einem Fahrzeug zugeordneten Informationswiedergabeeinrichtungen, die jeweils einen vor dem Fahrzeug angeordneten Bildschirm aufweisen.

Derartige Autokinos oder «Drive-in Filmtheater» werden üblicherweise von den Interessenten in Personenkraftwagen, jedoch auch mit anderen Fahrzeugen (Motorräder, Fahrräder) und sogar zu Fuß besucht. Bei herkömmlichen Autokinos ist eine im allgemeinen haushohe Bildwand vorgesehen, vor der die Fahrzeuge in einem ungefähr kreissektorförmigen Bereich parken, so dass die Fahrzeuginsassen den auf die Bildwand projizierten Film betrachten können. Ein derartiges Autokino stellt eine beträchtliche Umweltbelastung dar. Die riesige Bildwand wird als landschaftliche Beeinträchtigung empfunden. Ferner ergeben sich verkehrstechnische Schwierigkeiten: zum einen ist eine von der Strasse einsehbare Bildwand verkehrsgefährdend, zum anderen führen der Beginn und das Ende einer Vorstellung in einem grossen Autokino (z. B. mit 600 Fahrzeugplätzen) nicht selten zu einem Verkehrschaos. Dies hat dazu geführt, dass es immer schwieriger wird, eine bauliche Genehmigung für ein Autokino zu erhalten.

Aus der US-A-2 734 420 ist ein Autokino bekannt, bei dem eine Vielzahl von kleinen Bildwänden kreisförmig verteilt so angeordnet ist, dass den ebenfalls kreisförmig auf durch Markierungen umgrenzten Abstellplätzen angeordneten Fahrzeugen jeweils eine eigene Bildwand zukommt. Die Bildwände erhalten ihr Filmbild von einer zentral im Kreis angeordneten Projektionseinrichtung, deren Lichtstrahlen über ein Reflektionssystem auf die einzelnen Bildwände abgelenkt werden. Wegen des Fehlens einer haushohen Bildwand werden die durch die Bildwand bedingten Umwelt- und Verkehrsprobleme zwar gemindert. Die kreisförmige Anordnung der Bildwände und damit der parkenden Fahrzeuge erlaubt jedoch nur eine sehr schlechte Platzausnutzung, und die optische Übertragung des Filmbildes über ein kompliziertes Ablenksystem dürfte nur eine unzureichende Bildqualität ermöglichen. Die verkehrstechnischen Probleme, die durch die gleichzeitige An- und Abfahrt der Fahrzeuge bei Vorstellungsbeginn und -ende auftreten, sind nach wie vor ungelöst. Bei diesem Autokino wie auch bei den herkömmlichen Autokinos hat der Besucher nur ein Programm zur Auswahl.

Der Erfindung liegt die Aufgabe zugrunde, ein Autokino der angegebenen Art ohne große Bildwand zu schaffen, das bei optimaler Platzausnutzung und ausgezeichneter Bildqualität eine geringe Umweltbelastung darstellt und weitgehend unabhängig vom Wetter und den Tageszeiten betrieben werden kann.

Diese Aufgabe ist erfindungsgemäss bei einem Autokino der eingangs angegebenen Art dadurch gelöst, daß als Informationsabspieleinrichtung mindestens eine Videoabspieleinrichtung und als Informationswiedergabeeinrichtungen Videowiedergabeeinrichtungen vorgesehen sind, wobei die Videoabspieleinrichtung mit jeder der Videowiedergabeeinrichtungen durch eine Vielzahl von Videokanälen verbunden ist, die über eine jeweils einer Videowiedergabeeinrichtung zugeordnete Wähleinrichtung ansteuerbar sind, und dass zur Aufnahme der Fahrzeuge bestimmte garagenähnliche Boxen vorgesehen sind, die Seitenwände, eine Decke und eine eine durchsichtige, insbesondere aus Panzerglas bestehende Scheibe enthaltende Stirnwand aufweisen, hinter der der den Bildschirm aufweisende Teil der Videowiedergabeeinrichtung angeordnet ist.

Abgesehen von der Tatsache, dass die erfindungsgemäss zum Einsatz kommenden Videoabspiel- und -wiedergabeeinrichtungen die Notwendigkeit einer grossen Bildwand in Fortfall bringen, führen sie desweiteren zu einer völligen räumlichen Unabhängigkeit zwischen den Informationsabspiel- und -wiedergabeeinrichtungen. Komplizierte Übertragungsmechanismen, wie beispielsweise die in der US-A-2 734 420 beschriebenen Projektionsmechanismen, kommen in Fortfall. Als Videokanäle können beispielsweise Leitungskabel und/oder elektromagnetische Wellen und/oder moduliertes Licht dienen. Hinzu kommt, dass es durch Einsatz der Videoabspiel- und -wiedergabeeinrichtungen möglich ist, mehrere Programme gleichzeitig abzuspielen, die jeweils über die der entsprechenden Videowiedergabeeinrichtung zugeordnete Wähleinrichtung ansteuerbar sind, und die Videoabspieleinrichtungen können mit gestaffelten Anfangszeiten arbeiten.

Von den zur Aufnahme der Fahrzeuge bestimmten garagenähnlichen Boxen kann die Videoabspieleinrichtung (beispielsweise ein die Videoabspieleinrichtung enthaltendes Gebäude) in beliebigem räumlichen Abstand angeordnet werden. Die Boxen selbst können in zweckmässiger geometrischer Anordnung vorgesehen werden, was eine optimale Platzausnutzung des Autokinos ermöglicht. Insbesondere kann die geometrische Aufteilung des Autokinos an beliebige räumliche Gegebenheiten angepasst werden.

Neben dem Fortfall der grossen Bildwand wird durch die Anordnung der garagenähnlichen Boxen eine weitere Reduzierung der Umweltbelastung erreicht, da der Bildschirm ausserhalb der Boxen für niemanden sichtbar und somit keine Ablenkung für den Verkehrsfluss auf angrenzenden Strassen gegeben ist. Dies ist auch in ästhetisch-moralischer Hinsicht, etwa im Hinblick auf für Jugendliche verbotene Filme, von Vorteil. Die Tatsache, dass die die Bildschirme aufweisenden Teile der Videowiedergabeeinrichtungen sowie die Fahrzeuge in den garagenähnlichen Boxen untergebracht sind, bedingt zahlreiche weitere Vorteile. Insbesondere ergibt dies volle Unabhängigkeit von der Umgebungshelligkeit, der Tageszeit und dem Wetter (Nebel), wodurch sich die Wirtschaftlichkeit des Autokinos erheblich steigern lässt. Ausserdem ergibt sich keine «Klangglocke» wie bei herkömmlichen Autokinos mit offenen Lautsprechersäulen, da zum einen der Schall von der Box gedämpft wird und zum anderen die Lautsprecher unbelegter Boxen automatisch abschaltbar ausgestaltet werden können. Ferner brauchen keine Lautsprecher und/oder Heizgeräte in den Innenraum des Fahrzeugs aufgenommen zu werden, so dass Kabelverbindungen zum Fahrzeuginnenraum und die dadurch bedingten Gefahren entfallen. Durch die Anordnung der insbesondere aus Panzerglas bestehenden Scheibe zwischen dem Fahrzeug und dem den Bildschirm aufweisenden Teil der Videowiedergabeeinrichtung ist letzterer gegenüber Beschädigungen bzw. Diebstahl geschützt, jedoch den Blicken der Betrachter zugänglich untergebracht. Die Betrachter werden durch die Scheibe vor möglichen durch Defekte in der Videowiedergabeeinrichtung entstehenden Gefahren geschützt.

Ergänzend zum Stand der Technik sei noch darauf hingewiesen, dass der Einsatz von Videoabspiel- und -wiedergabeeinrichtungen zum Abspielen und Wiedergeben von Informationen, wobei die Videoabspieleinrichtung mit jeder der Videowiedergabeeinrichtungen durch eine Vielzahl von Videokanälen verbunden ist, die über eine jeweils einer Videowiedergabeeinrichtung zugeordnete Wähleinrichtung ansteuerbar sind, grundsätzlich bekannt ist. So ist beispielsweise in der US-A-3 968 327 der Einsatz von derartigen Systemen für Motels, Hotels, Krankenhäuser bzw. Appartmenthäuser beschrieben. Die DE-B-1 234 784 beschreibt ein System, bei dem zwischen einer Fernsehanstalt und einem Teilnehmer der Teilnehmer zu einer von ihm gewünschten Uhrzeit ein gewünschtes Programm abrufen kann. Beide Systeme bedingen einen sehr hohen technischen Aufwand und benötigen zur Durchführung ein bereits existierendes Fernsehübertragungssystem bzw. -empfangssystem, wobei die einzelnen Fernsehempfänger mit Zusatzeinrichtungen zum Abrufen der gewünschten Programme versehen sind. Das erfindungsgemäss ausgebildete Autokino macht jedenfalls von einem bestehenden Fernsehnetz keinen Gebrauch.

Bei dem erfindungsgemäss ausgebildeten Autokino sind zweckmässigerweise mehrere garagenähnliche Boxen nebeneinander angeordnet, und es ist angrenzend an die Stirnwand ein Gang vorgesehen. Von diesem Gang aus ist der den Bildschirm aufweisende Teil der Videowiedergabeeinrichtung zu Wartungs- und Reparaturzwecken zugänglich. Hierbei ist zweckmässigerweise beidseitig des Ganges jeweils eine Boxenreihe angeordnet.

Vorzugsweise ist der den Bildschirm aufweisende Teil der Videowiedergabeeinrichtung ein Fernsehgerät, ein Monitor und/oder ein Videoprojektor. Die Videoabspieleinrichtung kann aus einem oder mehreren Videobandgeräten oder Videoplattengeräten oder Filmabtastgeräten bestehen. Über die Vielzahl der Videokanäle wird es möglich, mehrere Filme, z.B. acht bis zehn Filme, zu bieten, so dass der Besucher eine freie Programmwahl hat. Vorzugsweise werden mehrere Filme zeitversetzt zueinander abgespielt. Die Anfangszeiten der (gleichen oder voneinander verschiedenen) Filme können hierbei so gestaffelt werden, dass z.B. alle fünf oder zehn Minuten ein neuer Film beginnt. Auf diese Weise ist es möglich, Spitzenbelastungen für das Zubringer-Strassennetz zu vermeiden. Es ergibt sich eine freie Verweildauer für den Besucher, und er ist an keine Anfangszeiten gebunden. Wegen des «Boxensystems» ist das Autokino auch für Besucher zu Fuss geeignet.

Das erfindungsgemässe Autokino beinhaltet ferner die Möglichkeit eines personalsparenden, vollautomatischen Gesamtablaufs des Autokinos, etwa durch Münzeinwurf in der garagenähnlichen Box.

Weitere vorteilhafte Ausgestaltungen der Erfindung sind in den abhängigen Ansprüchen angegeben.

Anhand der Zeichnung wird ein bevorzugtes Ausführungsbeispiel der Erfindung näher erläutert. Es zeigen:

Fig. 1 einen schematischen Grundriss eines erfindungsgemässen Autokinos,

Fig. 2 einen vergrösserten Grundriss eines Teils des Autokinos nach Fig. 1 zur Veranschaulichung der Boxenreihen,

Fig. 3 einen Querschnitt durch die Boxenreihen nach Fig. 2,

Fig. 4 einen Längsschnitt durch eine einzelne Box in vergrösserter Darstellung,

Fig. 5 eine teilweise geschnittene Draufsicht auf die Box nach Fig. 4,

Fig. 6 eine Aufsicht auf die vordere Stirnseite der Box nach den Fig. 4, 5.

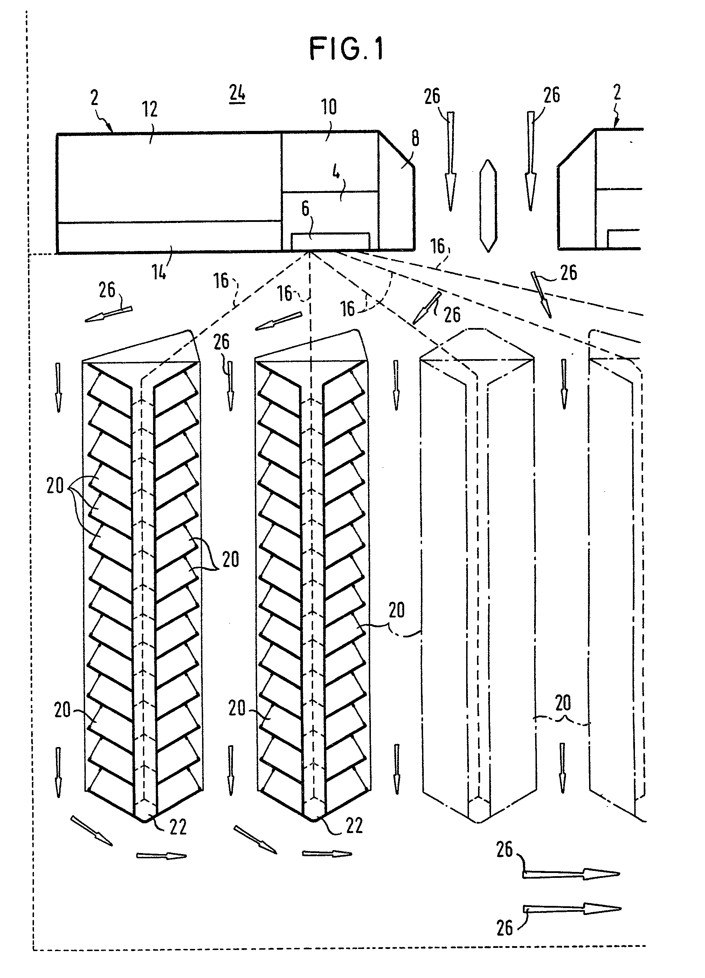

Wie Fig. 1 zeigt, besitzt das dargestellte Autokino ein Gebäude 2, das eine technische Zentrale in Form eines Abspielraumes 4 enthält. Im Abspielraum 4 befindet sich eine (schematisch angedeutete) Videoabspieleinrichtung 6. Das Gebäude 2 enthält im dargestellten Ausführungsbeispiel ferner eine Kasse 8, eine Werkstatt 10, ein Restaurant 12 und Toiletten 14.

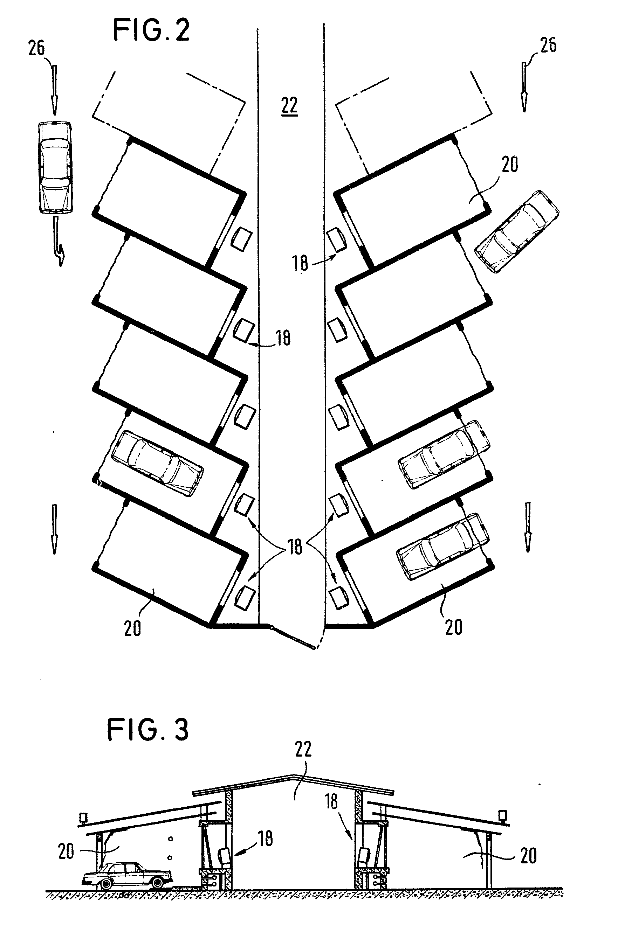

Die Videoabspieleinrichtung 6 besteht aus einer Anzahl von Videobandgeräten oder Videoplattengeräten oder Filmabtastgeräten (nicht gezeigt), die über Videokanäle 16 mit einzelnen Videowiedergabeeinrichtungen 18 (vgl. Fig. 2 und 3) verbunden sind. Als Videokanäle 16 dienen vorzugsweise Leitungskabel; es können jedoch auch elektromagnetische Wellen oder moduliertes (sichtbares oder unsichtbares) Licht verwendet werden. Die die Bildschirme aufweisenden Teile der Videowiedergabeeinrichtungen 18 sind jeweils an einer Stirnseite garagenähnlicher Boxen 20 angeordnet, die jeweils zur Aufnahme eines Fahrzeuges dienen.

Die Boxen 20 sind in parallelen Reihen angeordnet, wobei die Boxen jeweils einer Reihe jeweils unmittelbar seitlich angrenzend angeordnet sind. Die Garagen 20 jeweils zweier Reihen sind einander so zugeordnet, dass sie spiegelsymmetrisch zu einem Mittelgang 22 liegen (Fig. 2, 3). Die Boxen 20 sind dem Mittelgang 22 so zugeordnet, dass der den Bildschirm aufweisende Teil der Videowiedergabeeinrichtung 18 vom Mittelgang für Reparatur- und Wartungszwecke zugänglich sind. Ferner sind die Boxen 20 bezüglich des Mittelgangs 22 schräg verlaufend angeordnet, um den Ein- und Austritt der Fahrzeuge in die Boxen 20 zu erleichtern.

Auf der von den Boxen 20 abgewandten Seite des Gebäudes 2 befindet sich ein Stauraum 24, der bei besonderem Andrang die wartenden Fahrzeuge aufnehmen kann. Der Verkehrsfluss im Autokino ist durch Pfeile 26 angedeutet.

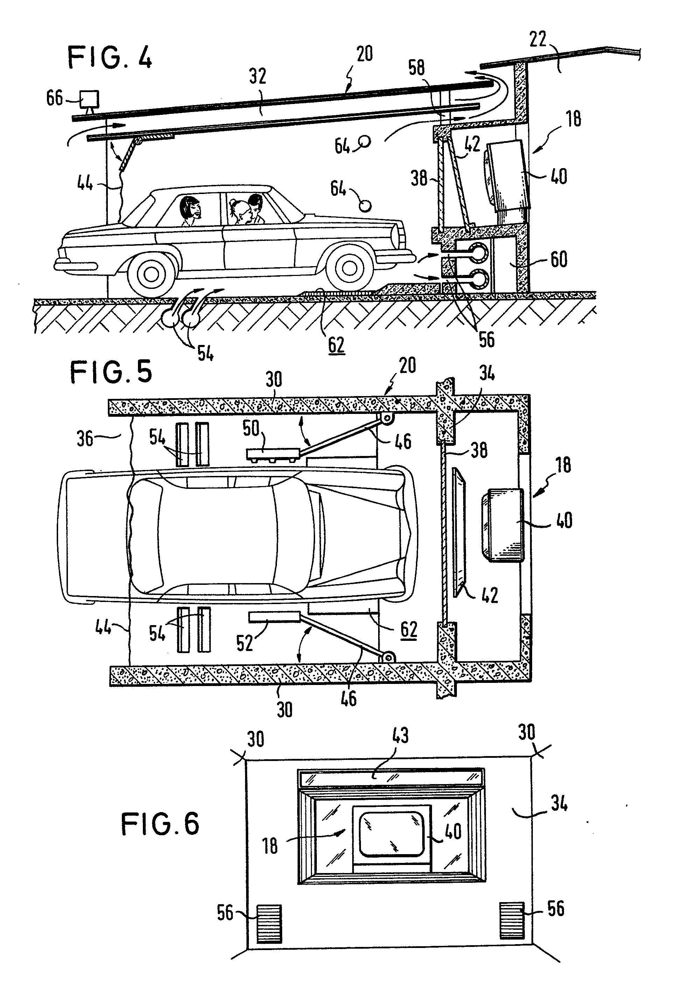

Die Ausgestaltung einer Box 20 ist in den Fig. 4 bis 6 genauer dargestellt. Jede Box 20 besitzt zwei Seitenwände 30, eine Decke 32, eine dem Bildschirm zugeordnete Stirnwand 34 und eine für den Ein- und Austritt dienende Stirnseite 36. Die Seitenwände 30, die Decke 32 und ein Teil der Stirnwand 34 können aus Beton bestehen. Die Stirnwand 34 weist eine rechteckige Ausnehmung auf (Fig. 6). Die Ausnehmung ist von einem durchsichtigen Glas in Form einer Panzerglasscheibe 38 verschlossen, so dass der Innenraum der Box 20 von dem Bildschirm getrennt, jedoch den Blicken der Betrachter zugänglich ist. Die Videowiedergabeeinrichtung 18 besteht aus einem Fernsehgerät 40 und einer vor dem Schirm des Fernsehgerätes 40 angeordneten Lupenscheibe in Form einer Fresnellinse 42, die auf einem erhöhten Podest stehen. Die Fresnellinse 42 dient zur Vergrösserung des vom Fernsehgerät 40 erzeugten Bildes, um dem Betrachter den Eindruck einer Bildwand zu vermitteln. Oberhalb der Panzerglasscheibe 38 befindet sich eine beleuchtbare Informationstafel 43 (Fig. 6), die Verhaltens- und Bedienungshinweise enthält.

Die Stirnseite 36 ist durch einen Vorhang 44 ganz oder teilweise verschliessbar. Der Vorhang 44 ist in einem solchen Bereich angeordnet, dass er sich im abgesenkten Zustand so auf das Heck eines in der Box 20 befindlichen Fahrzeuges legt, dass sich der Auspuff im Freien befindet. Der Vorhang 44 besteht z.B. aus einem starren Abschnitt und einem biegsamen Abschnitt, derart, dass der Vorhang durch Verschwenken des starren Abschnitts abgesenkt und angehoben werden kann.

An jeder Seitenwand 30 ist ein Ausleger 46 in Form eines Schwenkarms angelenkt, von denen der (in Blickrichtung) linksseitige Ausleger 46 einen Lautsprecher und ein Bedienungspult 50 und der andere Ausleger 46 nur einen Lautsprecher 52 trägt. Die Ausleger 46 sind aus einer an der Seitenwand 30 anliegenden Stellung seitlich an die Seitenfenster des Fahrzeuges heranschwenkbar, um die Bedienung zu erleichtern und die benötigte Lautstärke der Tonwiedergabe zu mindern. Es versteht sich, dass die Lautsprecher (und ggf. ein Bedienungspult) auch unmittelbar an der Seitenwand angebracht werden können, so dass in diesem Fall kein Ausleger erforderlich ist.

Zum Klimatisieren und Belüften jeder Box 20 sind am Boden der Box Zufuhröffnungen 54 zum Zuführen von Frisch- und Warmluft vorgesehen; ferner befinden sich im Podest unterhalb der Videowiedergabeeinrichtung 18 Abluftöffnungen 56, die an einer zentralen Lüftungsanlage mit einem Gebläse (nicht gezeigt) angeschlossen sind. Ferner sind in der Stirnseite 34 oberhalb des Panzerglases 38 Entlüftungsöffnungen 58 vorgesehen.

In dem Podest unterhalb der Videowiedergabeeinrichtung 18 befindet sich ferner ein Kabelschacht 60, der zur Aufnahme der Kabelleitungen 16 dient.

Jede Box 20 ist mit einer Fühleinrichtung 62 versehen, die auf das Vorhandensein der Vorderräder des Fahrzeugs anspricht und ein Steuersignal erzeugt. Im dargestellten Ausführungsbeispiel besteht die Fühleinrichtung 62 aus einem Kontaktfühler, der auf den Druck der Vorderräder des Fahrzeugs anspricht; die Fühleinrichtung kann jedoch auch das Vorhandensein des Fahrzeugs durch Abfühlen der Kapazität oder der Eisenmasse des Fahrzeuges registrieren oder als Lichtschranke ausgebildet sein. Es kann ferner ein akustischer Fühler (nicht gezeigt) vorgesehen werden, der in Abhängigkeit von dem Motorgeräusch ein Steuersignal erzeugt. Diese Steuersignale können gekoppelt dazu benutzt werden, die Betätigung des Vorhangs 44, das Aufleuchten der Informationstafel 43, das Verschwenken der Ausleger 46 und/oder die Beeinflussung der Frisch- und Warmluftzufuhr automatisch vornehmen zu lassen.

An den Seitenwänden 30 sind auf unterschiedlicher Höhe Gassensoren 64 angeordnet, die bei Überschreiten der zulässigen Abgaskonzentration einen Alarm sowohl im Gebäude 2 wie auch auf der Informationstafel 43 auslösen und ausserdem den Vorhang 44 anheben.

Die Decke 32 besteht aus zwei durch Stelzen auf Abstand zueinander gehaltenen Platten, so dass zur Wärme- bzw. Kältedämmung Aussenluft im Zwischenraum zwischen den beiden Platten zirkulieren kann. Hier könnte, falls erforderlich, eine Wasserberieselungsanlage (nicht gezeigt) zum Feuerschutz vorgesehen werden. Am Dach 32 ist eine Kontrolleuchte 66 in Form eines beleuchtbaren Nummernschildes vorgesehen, das ebenfalls in Abhängigkeit von dem durch den Fühler 62 erzeugten Steuersignal eingeschaltet wird und zur Kontrolle von aussen dient.

Der Betrieb des beschriebenen Autokinos ergibt sich weitgehend aus der obigen Erläuterung. Fährt ein Kraftfahrzeug in eine freie Box 20 (bei angehobenem Vorhang 44) ein und gelangen die Vorderräder in den Bereich des Fühlers 62, so wird ein Steuersignal erzeugt. Wird der Motor abgeschaltet, so wird ein zweites Steuersignal erzeugt. Das gemeinsame Auftreten der beiden Steuersignale leitet dann automatisch folgende Vorgänge ein: (Zeitverzögertes) Absenken des Vorhangs 44, Heranschwenken der Ausleger 46, Aufleuchten der Informationstafel 43, Umschalten der Frischluft- und Warmluftzufuhr auf «Intensivstufe», Ausschalten der Kontrolleuchte 66. Anhand des Bedienungspultes 50, das mit dem Abspielraum 4 im Gebäude 2 in Verbindung steht, kann dann das Programm gewählt und die Frischluft- bzw. Warmluftzufuhr eingestellt werden. Ferner erlaubt das Bedienungspult 50 einen Serviceruf zum Gebäude 2. Schliesslich kann mit dem Bedienungspult 50 der Vorhang 44 wahlweise betätigt werden.

Der Vorhang 44 dient nicht nur als Wärmeschutz, sondern auch als Lichtschutz, so dass das Autokino zu jeder Tageszeit und bei jedem Wetter benutzt werden kann. Der Vorhang 44 kann an der Oberseite des Fahrzeughecks enden; er kann sich jedoch auch beidseitig zum Fahrzeug bis zum Boden erstrecken, um eine möglichst weitgehende Abdichtung zu erzielen.

Vorzugsweise werden mehrere Filme, z. B. 8–10 Filme, vorgeführt, so dass der Besucher einen von ihm gewünschten Film aussuchen kann. Die Filme werden zeitversetzt zueinander gestartet, so dass in relativ kurzen Abständen jeweils Vorstellungsbeginn ist. Hierdurch werden die bei herkömmlichen Autokinos unvermeidlichen Spitzenbelastungen für das Zubringer-Strassennetz vermieden.

Bei Wiederanlassen des Motors wird der Vorhang 44 angehoben, die Ausleger 46 werden zurückgeschwenkt, und die Übertragung (falls nicht ohnehin zu Ende) wird beendet. Verlässt das Fahrzeug die Box 22, so wird die Informationstafel 43 abgeschaltet und die Kontrolleuchte 66 eingeschaltet. Die Frischluft- bzw. Warmluftzufuhr wird abgeschaltet bzw. gedrosselt.

**Patentansprüche**

1. Autokino mit einer zentralen Informationsabspieleinrichtung und mit einer Vielzahl von jeweils einem Fahrzeug zugeordneten Informationswiedergabeeinrichtungen, die jeweils einen vor dem Fahrzeug angeordneten Bildschirm aufweisen, dadurch gekennzeichnet, dass als Informationsabspieleinrichtung mindestens eine Videoabspieleinrichtung (6) und als Informationswiedergabeeinrichtungen Videowiedergabeeinrichtungen (18) vorgesehen sind, wobei die Videoabspieleinrichtung (6) mit jeder der Videowiedergabeeinrichtungen (18) durch eine Vielzahl von Videokanälen verbunden ist, die über eine jeweils einer Videowiedergabeeinrichtung (18) zugeordnete Wähleinrichtung ansteuerbar sind, und dass zur Aufnahme der Fahrzeuge bestimmte garagenähnliche Boxen (20) vorgesehen sind, die Seitenwände (30), eine Decke (32) und eine eine durchsichtige, insbesondere aus Panzerglas bestehende Scheibe (38) enthaltende Stirnwand (34) aufweisen, hinter der der den Bildschirm aufweisende Teil der Videowiedergabeeinrichtung (18) angeordnet ist.

2. Autokino nach Anspruch 1, dadurch gekennzeichnet, dass mehrere garagenähnliche Boxen (20) nebeneinander angeordnet sind und angrenzend an die Stirnwand (34) ein Gang (22) vorgesehen ist, von dem aus der den Bildschirm aufweisende Teil der Videowiedergabeeinrichtung (18) zu Wartungs- und Reparaturzwecken zugänglich ist.

3. Autokino nach Anspruch 2, dadurch gekennzeichnet, dass beidseitig des Ganges (22) jeweils eine Boxenreihe angeordnet ist.

4. Autokino nach Anspruch 1, dadurch gekennzeichnet, dass mehrere Videoabspieleinrichtungen (6) vorgesehen sind, auf denen Programmträger angeordnet sind, die mit gestaffelten Anfangszeiten ablaufen.

5. Autokino nach Anspruch 1, dadurch gekennzeichnet, dass der den Bildschirm aufweisende Teil der Videowiedergabeeinrichtung (18) ein Fernsehgerät (40), ein Monitor und/oder ein Videoprojektor ist.

6. Autokino nach Anspruch 1, dadurch gekennzeichnet, dass vor dem Bildschirm jeder Videowiedergabeeinrichtung (18) eine Lupe oder Lupenscheibe, insbesondere eine Fresnellinse (42), zur Vergrösserung des Bildes angeordnet ist.

7. Autokino nach Anspruch 1, dadurch gekennzeichnet, dass die Videoabspieleinrichtung (6) aus einem oder mehreren Videobandgeräten oder Videoplattengeräten oder Filmabtastgeräten besteht.

8. Autokino nach Anspruch 1, dadurch gekennzeichnet, dass als Videokanäle Leitungskabel (16) und/oder elektromagnetische Wellen und/oder moduliertes Licht dienen.

9. Autokino nach Anspruch 1, dadurch gekennzeichnet, dass die Decke (32) der Box (20) zur Wärmeisolierung aus zwei mit Abstand zueinander angeordneten Platten besteht.

10. Autokino nach Anspruch 1, dadurch gekennzeichnet, dass oberhalb des den Bildschirm aufweisenden Teiles der Videowiedergabeeinrichtung (18) eine beleuchtbare Informationstafel (43) angeordnet ist.

11. Autokino nach Anspruch 1, dadurch gekennzeichnet, dass die der Videowiedergabeeinrichtung (18) gegenüberliegende, für den Ein- und Austritt des Fahrzeuges dienende Stirnseite (36) der Box (20) durch einen anhebbaren Vorhang (44) zum Licht- und Wärmeschutz ganz oder teilweise verschliessbar ist.

12. Autokino nach Anspruch 11, dadurch gekennzeichnet, dass der Vorhang (44) so im Bereich des Fahrzeughecks absenkbar ist, dass der Fahrzeugauspuff im Freien bleibt.

13. Autokino nach Anspruch 1, dadurch gekennzeichnet, dass an der Box (20) innen mindestens ein Ausleger (46) angebracht ist, der zu einem Seitenfenster des Fahrzeuges hin verstellbar ist und ein Bedienungspult (50) und/oder einen Lautsprecher (52) trägt.

14. Autokino nach Anspruch 1, dadurch gekennzeichnet, dass jede Box (20) mit einer an einer zentralen Lüftungsanlage angeschlossenen Lüftungseinrichtung (54, 56) zum Zuführen von Frischluft und/oder Warmluft und zum Abführen von Abluft versehen ist.

15. Autokino nach einem der Ansprüche 10 bis 14, gekennzeichnet durch eine auf das Vorhandensein eines Fahrzeuges und/oder das Ab- bzw. Anschalten des Fahrzeugmotors ansprechende Fühleinrichtung (62) zum Erzeugen eines Steuersignals, das zum automatischen Betätigen des Vorhangs (44), der Lüftungseinrichtung (54, 56), des Auslegers (46), der Informationstafel (43) und/oder einer an der Aussenseite der Box (20) angebrachten Kontrolleuchte (66) dient.

16. Autokino nach Anspruch 15, dadurch gekennzeichnet, dass die Fühleinrichtung (62) das Vorhandensein eines Fahrzeuges durch Abfühlen des durch das Gewicht des Fahrzeuges erzeugten Drucks, der Kapazität oder der Eisenmasse des Fahrzeuges oder durch eine Lichtschranke feststellt.

17. Autokino nach Anspruch 1, dadurch gekennzeichnet, dass im Innenraum der Box mindestens ein Gassensor (64) angeordnet ist, der bei Überschreiten einer unzulässigen Motorabgaskonzentration ein Warnsignal und/oder ein Steuersignal erzeugt.

**Claims**

1. An auto theatre with a central information reproducing device and with a plurality of information playback devices, respectively, for each vehicle, said information playback devices each comprising a picture screen in front of the vehicle, characterized in that as information reproducing device at least one video reproducing device (6) and as information playback devices video playback devices (18) are provided, said video reproducing device (6) being connected with each of said video playback devices (18) through a plurality of video channels which are controllable by a selection means associated with one video playback device (18), respectively, and in that garage-like boxes (20) for the receipt of the vehicles are provided which include sidewalls (30), an upper covering (32) and a front wall (34) containing a transparent pane (38) especially of bullet-proof glass, the section of the video playback device (18) containing the picture screen being disposed behind said front wall.

2. The auto theatre according to claim 1, characterized in that a plurality of garage-like boxes (20) is arranged side by side, and in that a passage (22) is provided adjacent to said front wall (34), the portion of the video playback device (18) containing the picture screen being accessible from said passage for maintenance and repair purposes.

3. The auto theatre according to claim 2, characterized in that a row of the boxes is arranged on each side of the passage (22).

4. The auto theatre according to claim 1, characterized in that a plurality of video reproducing devices (6) is provided on which program carriers are disposed which run with staggered starting times.

5. The auto theatre according to claim 1, characterized in that the section of the video playback device (18) containing the picture screen is a television set (40), a monitor and/or a video projector.

6. The auto theatre according to claim 1, characterized in that in front of the picture screen of each video playback device (18) a magnifying lense or lense sheet, especially a Fresnell lense (42), is arranged for the enlargement of the picture.

7. The auto theatre according to claim 1, characterized in that the video reproducing device (6) consists of one or more video tape apparatusses or video disc apparatusses or film scanning apparatusses.

8. The auto theatre according to claim 1, characterized in that conductive cables (16) and/or electro-magnetic waves and/or modulated light serves as video channels.

9. The auto theatre according to claim 1, characterized in that the upper covering (32) of said box (20) consists of two plates spacedly arranged with restect to each other for thermal insulation.

10. The auto theatre according to claim 1, characterized in that an illuminatable information tablett (43) is arranged above the section of the video playback device (18) containing the picture screen.

11. The auto theatre according to claim 1, characterized in that the front wall (36) of the box (20) lying opposite to the video playback device (18) and serving for the entrance and exit of the vehicle is fully or partially closeable by a raisable drape (44) for light and warmth protection.

12. The auto theatre according to claim 11, characterized in that said drape (44) is so lowerable in the region of the vehicle rear that the vehicle exhaust remains in the open.

13. The auto theatre according to claim 1, characterized in that at least one arm (46) is provided in the inside of the box (20), said arm being adjustable to a side window of the vehicle and carrying a service desk (50) and/or a loudspeaker (52).

14. The auto theatre according to claim 1, characterized in that each box (20) is provided with a ventilation device (54, 56) connected to a central ventilation apparatus for the provision of fresh air and/or warm air and for the removal of exhaust air.

15. The auto theatre according to one of the claims 10 to 14, characterized by a sensing apparatus (62) responsive to the presence of a vehicle and/or the turning-off or turning-on of the vehicle motor for producing a control signal which serves for the automatic operation of the drape (44), the ventilation device (54, 56), the arm (46), the information tablet (43) and/or control light (66) positioned on the outer side of the box.

16. The auto theatre according to claim 15, characterized in that said sensing apparatus (62) establishes the presence of a vehicle through the sensing of the pressure caused by the weight of the vehicle, the capacitance or the iron mass of the vehicle or through a light barrier.

17. The auto theatre according to claim 1, characterized in that at least one gas sensor (64) is arranged in the inner space of the box, said gas sensor producing a warning signal and/or a control signal upon exceeding of an impermissible motor exhaust gas concentration.

**Revendications**

1. Cinématographe pour automobiles avec un dispositif de déroulement d'information central et une multiplicité de dispositifs de reproduction d'information attribués chacun à une automobile, lesquels comportent chacun un écran pour image disposé devant l'automobile, caractérisé en ce qu'on prévoit, pour servir de dispositif de déroulement d'information, au moins un dispositif de spectacle vidéo (6), et pour servir de dispositifs de reproduction d'information, des dispositifs (18) de reproduction vidéo, le dispositif (6) de spectacle vidéo étant relié à chacun des dispositifs (18) de reproduction vidéo par une multiplicité de canaux vidéo qui peuvent être commandés par l'intermédiaire d'un dispositif de sélection attribué chaque fois à un dispositif (18) de reproduction vidéo et en ce qu'on prévoit des boxes (20) ayant la forme de garages et conçus pour recevoir les automobiles, qui comportent des parois latérales (30), un plafond (32) et une paroi frontale (34) incluant une vitre (38) transparente, en particulier en verre armé, derrière laquelle la partie, comportant l'écran d'image, du dispositif de reproduction vidéo (18) est disposée.

2. Cinématographe pour automobiles selon revendication 1, caractérisé en ce que plusieurs boxes (20) semblables à des garages sont disposés les uns à côté des autres et en ce qu'un couloir (22) est disposé à la limite contre la paroi frontale (34), couloir par lequel la partie comportant l'écran d'image du dispositif (18) de reproduction vidéo est accessible pour l'entretien et les réparations.

3. Cinématographe pour automobiles selon revendication 2, caractérisé en ce qu'une rangée de boxes est chaque fois disposée des deux côtés du couloir (22).

4. Cinématographe pour automobiles selon revendication 1, caractérisé en ce qu'on prévoit plusieurs dispositifs (6) de spectacle vidéo, sur lesquels des porteurs de programmes sont disposés, qui circulent avec des temps de début échelonnés.

5. Cinématographe pour automobiles selon revendication 1, caractérisé en ce que la partie comportant l'écran d'image du dispositif (18) de reproduction vidéo est un appareil de télévision (40), un contrôleur et/ou un projecteur vidéo.

6. Cinématographe pour automobiles selon revendication 1, caractérisé en ce que devant l'écran d'image de chaque dispositif (18) de reproduction vidéo il est disposé une loupe ou vitre grossissante, en particulier une lentille de Fresnell (42) pour agrandir l'image.

7. Cinématographe pour automobiles selon revendication 1, caractérisé en ce que le dispositif (6) de déroulement vidéo est constitué par un ou plusieurs appareils à bandes vidéo ou appareils à disques vidéo ou bien appareil d'exploration de films.

8. Cinématographe pour automobiles selon revendication 1, caractérisé en ce que des câbles conducteurs (16) et/ou des ondes éléctromagnétiques et/ou la lumière modulée servent de canaux vidéo.

9. Cinématographe pour automobiles selon revendication 1, caractérisé en ce que le plafond (32) du box (20) est constitué, pour l'isolement calorifique, par deux plaques disposées avec écartement mutuel.

10. Cinématographe pour automobiles selon revendication 1, caractérisé en ce qu'au-dessus de la partie comportant l'écran d'image du dispositif (18) de reproduction vidéo une table d'information (43) pouvant être éclairée est disposée.

11. Cinématographe pour automobiles selon revendication 1, caractérisé en ce que le côté frontal (36) du box (20), côté qui est opposé au dispositif (18) de reproduction vidéo et qui sert à l'entrée et à la sortie de l'automobile, peut être fermé totalement ou partiellement par un rideau relevable (44) pour se protéger de la lumière et de la chaleur.

12. Cinématographe pour automobiles selon revendication 11, caractérisé en ce que le rideau (44) peut être abaissé dans la région de l'arrière de la voiture de façon que l'échappement du moteur se fasse à l'extérieur.

13. Cinématographe pour automobiles selon revendication 1, caractérisé en ce qu'au moins un bras en flèche (46) est monté sur le box (20) à son intérieur, ce bras pouvant être déplacé vers une fenêtre latérale de l'automobile et portant un pupitre de service (50) et/ou un haut-parleur (52).

14. Cinématographe pour automobiles selon revendication 1, caractérisé en ce que chaque box (20) est pourvu d'un dispositif d'aération (54, 56) relié à une installation d'aération centrale pour amener de l'air frais et/ou de l'air chaud et pour évacuer l'air pollué.

15. Cinématographe pour automobiles selon l'une des revendications 10 à 14, caractérisé en ce qu'il comporte un dispositif détecteur (62) répondant à la présence d'une automobile et/ou à l'arrêt ou à la mise en marche du moteur de celle-ci pour produire un signal de commande qui sert à l'actionnement automatique du rideau (44), du dispositif d'aération (54, 56), du bras (46), de la table d'information (43) et/ou d'un feu de contrôle (66) monté sur le côté extérieur du box.

16. Cinématographe pour automobiles selon revendication 15, caractérisé en ce que le dispositif détecteur (62) détecte la présence d'une automobile par détection de la pression produite par le poids de l'automobile, de la capacité ou de la masse du fer de l'automobile, ou grâce à une barrière lumineuse.

17. Cinématographe pour automobiles selon revendication 1, caractérisé en ce qu'au moins un capteur de gaz (64) est disposé dans l'espace intérieur du box, lequel capteur produit un signal d'alerte et/ou un signal de commande lors du dépassement d'une concentration inacceptable de gaz pollué du moteur.

# FIG.1

# FIG.2

# FIG. 3

FIG. 4

FIG. 5

FIG. 6